# EUROPÄISCHE PATENTANMELDUNG

(11) **EP 1 065 230 A2**
(43) Veröffentlichungstag der Anmeldung: **03.01.2001**
(21) Anmeldenummer: 00121946.8
(22) Anmeldetag: 17.08.1995
(51) Int. Cl.: C08G 63/82, C08G 63/85, C08G 63/87, C08G 63/20, C08G 63/60

(54) **Thermostabile, farbneutrale, antimonfreie Polyester und Verfahren zu deren Herstellung**

(30) Priorität: 29.08.1994 DE 4430634
(62) Teilanmeldung aus: 95112912.1
(71) Anmelder: ARTEVA TECHNOLOGIES S.à.r.l., 8001 Zürich (CH)
(72) Erfinder: Dominguez, Ligia, Dr., c/Rodrigo de Triana, 41927 Mairena del Aljarafe, Sevilla (ES); Moore, Banks Brian, Dipl.-Ing., Spartanburg SC 29301 (US); Klein, Peter, Dr., 65205 Wiesbaden (DE)
(74) Vertreter: Plate, Jürgen, Dr.

(57) **Zusammenfassung**

Die vorliegende Erfindung betrifft thermostabile, farbneutrale, antimonfreie Polyester unter Verwendung eines Titan-Polykondensationskatalysators, die sich durch hervorragende Klarheit und Farbneutralität auszeichnen, und ein Verfahren zu deren Herstellung, das sehr gut reproduzierbar ist, eine sehr hohe Polykondensationsgeschwindigkeit auch bei sehr geringen Zusätzen des Titan-Polykondensationskatalysators aufweist und bei dem sich eine erhebliche Verminderung des thermischen Abbaus und der unkontrollierten Vernetzung des gebildeten Polyesters ergibt.

## Beschreibung

Die vorliegende Erfindung betrifft thermostabile, farbneutrale, antimonfreie Polyester, die unter Verwendung eines Titan-Polykondensationskatalysators hergestellt sind, sich durch hervorragende Klarheit und Farbneutralität auszeichnen und bei denen sich eine erhebliche Verminderung des thermischen Abbaus und der unkontrollierten Vernetzung ergibt, sowie ein Verfahren zu deren Herstellung, das sehr gut reproduzierbar ist, eine sehr hohe Polykondensationsgeschwindigkeit auch bei sehr geringen Zusätzen des Titan-Polykondensationskatalysators aufweist.

Polyester haben auf sehr vielen Anwendungsgebieten eine sehr große Bedeutung gewonnen. Insbesondere werden gesättigte Polyester für die Herstellung von Fasermaterialien aber auch von andersartigen Formkörpern, zum Beispiel von Getränkeflaschen, in großem Umfang eingesetzt. Für eine einwandfreie Verarbeitbarkeit dieser Polyester durch Extrusionsverfahren und für die weitere Anwendung der Extrudate, wie z.B. in der Textil- oder Getränkeindustrie, werden sehr hohe Anforderungen an die Qualität der Polyester gestellt. Insbesondere wird gefordert, daß die verarbeitungstechnischen und anwendungstechnischen Eigenschaften von Polyestertypen für bestimmte Verarbeitungen innerhalb sehr enger Grenzen stets gleich sind. Für die Verarbeitung durch Extrusionsverfahren, z.B. durch Schmelzspinnen, ist es von ausschlaggebender Bedeutung, daß sie ein stets gleichmäßiges Molekulargewicht und eine stets reproduzierbare Molekulargewichtsverteilung aufweisen, frei sind von Gel-Anteilen, und möglichst nicht zur Vergilbung oder zu thermischem Abbau neigen. Für die Weiterverarbeitung sollten sich bei Färbeprozessen möglichst keine Katalysatormetalle aus dem Fasermaterial herauslösen, da diese durch aufwendige Reinigungsoperationen aus dem Färbereiabwasser entfernt und entsorgt werden müssen.

Auch bei der Entsorgung oder Wiederverwertung (Recyclisierung) der gebrauchten Polyestererzeugnisse sollten sich keine Schwierigkeiten durch störende Bestandteile ergeben.

Die Herstellung von Polyestern erfolgt üblicherweise durch Veresterung aromatischer Dicarbonsäuren oder Umesterung niederer aliphatischer Ester aromatischer Dicarbonsäuren mit aliphatischen Diolen und anschließende Polykondensation bis das für den geplanten Einsatz erforderliche Molekulargewicht erreicht ist.

Eine eventuelle Umesterung wird in Gegenwart von Umesterungskatalysatoren ausgeführt, die nach Abschluß der Umesterung durch Zusatz von Komplexbildnern desaktiviert werden müssen. Als Komplexbildner werden meist Phosphorsäure, phosphorige Säure und/oder Phosphonsäuren oder Derivate derselben eingesetzt.

Nach der Veresterung oder der Umesterung erfolgt die Polykondensation zu dem gewünschten Molekulargewicht, die ebenfalls in Gegenwart eines geeigneten Katalysators ausgeführt wird. Als Polykondensationskatalysator haben sich in der Großtechnik Antimonverbindungen, meist Antimontrioxid durchgesetzt. Hierbei kann es vorkommen, daß ein Teil der Antimonverbindung durch reduzierende Agenzien zu Antimonmetall reduziert wird, was zu einer Vergrauung des Polyesters führt. Daraus ergibt sich eine mangelhafte Klarheit und ein nicht neutraler Farbton.

Darüber hinaus wird der relativ hohe Gehalt der Polyester an Antimonverbindungen als ein Nachteil angesehen, da er die Herstellung verteuert. Zusätzlich besteht die Möglichkeit, daß Antimonverbindungen bei Weiterverarbeitungsverfahren, z.B. beim Färben, freigesetzt werden. Der relativ hohe Gehalt an Antimonverbindungen führt, neben der Bildung von Antimonablagerungen, zu einer Beeinflussung des Spinnverhaltens.

Es sind daher schon Vorschläge gemacht worden, die Nachteile des beschriebenen Herstellungsverfahrens zu beseitigen.

So ist es bekannt, den Farbton der Polyester durch den Zusatz von Kobaltverbindungen und/oder optischen Aufhellern zu verbessern. Es ist ferner bekannt, als Polykondensationskatalysator anstelle von Antimonverbindungen Titanverbindungen einzusetzen.

Aus verschiedenen Druckschriften, beispielsweise der US-A-3,962,189, der JP-PS-28006 (1979), der JP-PS-123311 (1976), der JP-PS-43564 (1979), der JP-PS-111985 (1980) oder der JP-PS-280048 (1989) ist ein Verfahren zur Herstellung von Polyestern bekannt, bei dem zur Verbesserung des Farbtones des Polyesters eine Kobaltverbindung zugeselzt wird, die - wie der Umesterungskatalysator - vor Beginn der Polykondensation komplexiert werden muß, und bei dem die Polykondensation in Gegenwart einer Titanverbindung durchgeführt wird. Die Menge des zur Komplexierung des Kobaltzusatzes eingesetzten Komplexbildners soll nach diesen Druckschriften im Bereich von 0,5 bis 7,5 Mol pro Mol Kobaltverbindung liegen. Gemäß der JP-PS-28006 wird ein P/Co-Verhältnis von 0,5 bis 1,5, in der JP-PS 111985 von 0,7 bis 3, in der JP-PS-280048 von 0,5 bis 7,5 [mol/mol] angewendet.

Dieses bekannte Verfahren hat den Vorteil, daß alle mit der Verwendung von Antimonverbindungen verbundenen Nachteile entfallen und daß es damit tatsächlich gelingen kann, farbneutrale und klare Polyester zu erzeugen, die sich für anspruchsvolle Verarbeitungsverfahren und Anwendungen eignen. Ein Nachteil besteht allerdings darin, daß seine Reproduzierbarkeit zu wünschen übrig läßt. So werden gelegentlich nicht die gewünscht Produkte erhalten, sondern es kommt zu Störungen der Polykondensationsreaktion. Die erforderlichen Molekulargewichte werden nicht erreicht, und bei einer für erforderlich gehaltenen Verlängerung der Polykondensationsdauer kommt es zu Vergilbung des Polyesters sowie zur Bildung von Gel-Anteilen durch unkontrollierte Vernetzung und zur thermischen Empfindlichkeit der Produkte, die die Weiterverarbeitung erheblich beeinträchtigen. Damit sind die Vorteile, die das Verfahren an sich bietet, nicht immer realisierbar.

Es wurde nun gefunden, daß es überraschenderweise gelingt, thermostabile, farbneutrale, antimonfreie Polyester in stets reproduzierbarer Weise herzustellen, durch
a)
   (i) Veresterung aromatischer Dicarbonsäuren mit aliphatischen Diolen oder
   (ii) Umesterung niederer aliphatischer Ester aromatischer Dicarbonsäuren mit aliphatischen Diolen in Gegenwart von 20 bis 120 ppm, bezogen auf das Katalysatormetall, eines Umesterungskatalysators, der nach Abschluß der Umesterung durch Zusatz eines Komplexierungsmittels inaktiviert wird, und
b) anschließende Polykondensation in Gegenwart einer Titanverbindung als Katalysator,

Nach Abschluß der Veresterung oder Umesterung werden dem Veresterungs- oder Umesterungsansatz
- 100% der zu dem eingesetzten Umesterungskatalysator äquivalenten Menge und
- 90 bis 99 % der zu dem einzusetzenden Kobalt äquivalenten Menge von Phosphorsäure, phosphoriger Säure und/oder Phosphonsäuren oder einem Derivat derselben als Komplexierungsmittel und
- dann dem Ansatz 20 bis 80 ppm Kobalt in Form einer Kobaltverbindung
zugefügt und die Polykondensation wird ohne Antimonzusatz in Gegenwart von 1 bis 10 ppm Titan, das in Form einer Titanverbindung zugesetzt wird, ausgeführt.

Geeignete Umesterungskatalysatoren sind aus der Literatur bekannt. Beispielsweise eignen sich für das Verfahren Verbindungen von Metallen der Gruppen Ia (z.B. Li, Na, K), IIa (z.B. Mg, Ca) und VIIa (z.B. Mn) des Periodensystems, insbesondere solche, die eine gewisse Löslichkeit in dem Umesterungsansatz haben, wie z.B. Salze organischer Säuren. Bevorzugt sind Salze der Gruppe VIIa, insbesondere des Mangans, mit niederen aliphatischen Karbonsäuren, insbesondere der Essigsäure.

Eine bevorzugte Ausführungsform des Verfahrens besteht daher dann daß eine eventuelle Umesterung in Gegenwart von 20 bis 120 ppm Mangan (gerechnet als Metall), in Form einer Manganverbindung, insbesondere von Manganazetat, ausgeführt wird.

Die zur Verbesserung des Farbtons des erfindungsgemäßen Polyesters zugesetzte Kobaltverbindung ist zweckmäßigerweise ebenfalls ein Salz des Kobalts mit einer organischen Säure, beispielsweise mit Essigsäure oder Adipinsäure. Die Mindestmenge der Kobaltverbindung richtet sich nach dem Ausmaß der Farbverschiebung, die im Einzelfall erforderlich ist, um einen neutralen Farbton zu erreichen. Werden zusätzlich optische Aufheller zu Farbkorrektur eingesetzt, so kann naturgemäß die Menge der Kobaltverbindung reduziert werden, In der Regel liegt die erforderliche Menge des Kobaltzusatzes, wie oben angegeben, bei maximal 50 ppm (gerechnet als Metall), stets bezogen auf das Gewicht des Polyesters. Vorzugsweise werden dem Ansatz 20 bis 40 ppm Kobalt, in Form einer Kobaltverbindung zugefügt, d.h. es wird eine solche Menge der Kobaltverbindung zugesetzt, die einer Menge von 20 bis 40 ppm freiem Kobalt entspricht.

Wie bei herkömmlichen Verfahren wird auch bei dem Verfahren zur Herstellung der erfindungsgemäßen Polyester der Umesterungskatalysator vor Beginn der Polykondensation durch Zusatz eines Komplexbildners inaktiviert, weil andernfalls die Polykondensation behindert wird, d.h. die erforderlichen hohen Molekulargewichte der Polyester nicht erreicht werden können und darüber hinaus der erhaltene Polyester eine erhöhte Empfindlichkeit gegen thermische Belastung hat. Vereinzelt sind auch die vor der Polykondensation zugesetzten Kobaltverbindungen komplexiert worden um die thermische Stabilität der Polyester zu verbessern.

Für das Verfahren ist nun wesentlich, daß auf keinen Fall die gesamte zugesetzte Menge der Kobaltverbindung inaktiviert werden darf, sondern daß 1 bis 10 % der zugesetzten Kobaltverbindung unkomplexiert bleiben. Die Menge des Komplexbildners wird daher so bemessen daß der Umesterungskatalysator zu 100 % durch Komplexierung desaktiviert wird, aber nur 90 bis 99 % der Kobaltverbindung komplexiert werden.

Sofern das Komplexierungsvermögen eines Komplexbildners genau bekannt ist, kann man einfach 90 bis 99 % der zu der Kobaltmenge äquivalenten Menge des Komplexbildners einsetzen. In der Regel ist es jedoch zweckmäßiger, die erforderliche Menge des Komplexbildners durch Vorversuche zu ermitteln. Hierzu werden beispielsweise einige Probeansätze des Polykondensationsansatzes, die alle die gleich Zusammensetzung wie ein geplanter Hauptansatz haben, mit von etwa 80% bis 120% der theoretisch erforderlichen Menge des Komplexbildners versetzt und dann unter den gleichen Bedingungen polykondensiert.

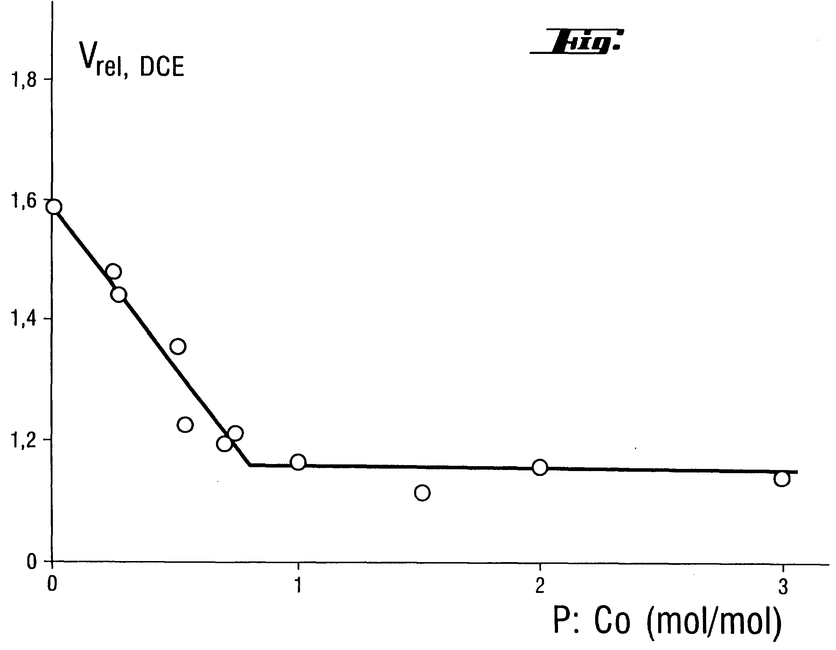

Nach Abschluß der Polykondensationsreaktion wird von allen Ansätzen die erreichte Viskosität (d.h. das erreichte Molekulargewicht) ermittelt. Die Ergebnisse einer solchen Vorversuchsreihe sind in der Figur dargestellt. Dort sind die erreichten Viskositäten gegen das Verhältnis von Komplexbildner zu Kobaltverbindung (z.B. das P/Co-Verhältnis) in einem Koordinatensystem aufgetragen. Man erkennt, daß bei einem zu hohen P/Co-Verhältnis nur geringe Viskositäten, d.h. niedrige Molekulargewichte erreicht werden können. Unterhalb einer bestimmten Grenze des P/Co-Verhältnisses steigen die erreichten Molekulargewichte an. Der Kreuzungspunkt zwischen dem flach verlaufenden und dem ansteigenden Kurvenast kennzeichnet das äquivalente P/Co-Verhältnis. Dem Hauptansatz werden dann bis zu 99 % der so ermittelten Menge des Komplexbildners zugesetzt.

Besonders vorteilhaft ist es, wenn nach Abschluß der Veresterung oder Umesterung dem Veresterungs- oder Umesterungsansatz 100 % der zu dem eingesetzten Umesterungskatalysator äquivalenten Menge und 90 bis 99 % der zu dem einzusetzenden Kobalt äquivalenten Menge von Phosphorsäure, phosphoriger Säure und/oder von Phosphonsäuren einem Derivat derselben als Komplexierungsmittel zugefügt wird.

Die Maßnahme, die zugesetzten Kobaltverbindungen nur teilweise zu desaktivieren, führt überraschenderweise zu einer drastischen Verbesserung der Reproduzierbarkeit des Verfahrens, es ergibt sich eine sehr hohe Polykondensationsgeschwindigkeit auch bei sehr geringen Zusätzen des Titan-Polykondensationskatalysators, eine erhebliche Verminderung des thermischen Abbaus und der unkontrollierten Vernetzung des gebildeten Polyesters mit der Konsequenz, daß keine Vergilbung und keine Gelbildung eintritt. Bei der Reaktionsführung kommt man daher auch mit geringeren Schönungszusätzen aus und erreicht eine einwandfrei Verarbeitbarkeit. Die erhaltenenen Polyester entsprechen höchsten Qualitätsanforderungen bezüglich Klarheit und Farbneutralität.

Als Komplexbildner eignen sich für das Verfahren grundsätzlich alle als Komplexbildner und Inaktivatoren für Umesterungskatalysatoren bekannten Verbindungen. Als besonders gut geeignet haben sich phosphorhaltige Verbindungen erwiesen, wie Phosphorsäure, Polyphosphorsäure, phosphorige Säure und Phosphonsäuren und Derivate derselben. Spezielle Beispiele für Phosphorsäure-Derivate sind die "PHM-Ester". Das sind Mischungen von oxalkylierten Alkylhydroxyalkyl-phosphorsäureestern der Formel O=P(OR¹)₃, worin die Reste R¹ gleiche oder verschiedene Alkyl-, Hydroxyalkyl- oder alkoxylierte Hydroxyalkylreste sind, oder Phosphonsäureester der Formel (R²O)₂-PO-R³-COOR⁴, worin R², R³ und R⁴ Alkylreste sind.

Als Polykondensationskatalysator werden beim Verfahren Titanverbindungen eingesetzt. Geeignet sind im Prinzip alle für diesen Zweck bereits beschriebenen Titanverbindungen, insbesondere Kallumtitanyloxalat oder Titanisopropylat.

Besonders bevorzugt ist es, die Polykondensation ohne Antimonzusatz in Gegenwart von 1 bis 10 ppm Titan bis zu einer intrinsischen Viskosität (IV), gemessen in Dichloressigsäure bei 25°C, von 0,4 bis 0,9 dl/g, vorzugsweise von 0,5 bis 0,7 dl/g, und bis zu einer Carboxylgruppenkonzentration von 10 bis 50 mmol/kg, vorzugsweise von 10 bis 40 mmol/kg, in der Schmelze, und anschließend bis zu der gewünschten Endviskosität in der Festphase auszuführen.

Die Endviskosität der erfindungsgemäßen Polyester soll im Bereich von 0,7 bis 2,0 dl/g, vorzugsweise von 0,7 bis 1,5 dl/g, gemessen unter den oben angegebenen Bedingungen, liegen. Die Polykondensationsdauer und die Polykondensationstemperatur werden in bekannter Weise so reguliert, daß die gewünschte Endviskosität erreicht wird. In der Regel wird die Polykondensation wie in der Technik der Polyesterherstellung üblich, je nach Art des Polyesters bei einer Temperatur von 260 bis 350 °C, vorzugsweise unter einem indifferenten Gas, beispielsweise unter Stickstoff, und/oder unter vermindertem Druck, der im Bereich von 0,2 bis 10 mbar, vorzugsweise von 0,4 bis 5 mbar, liegt, ausgeführt.

Zur Einstellung bestimmter Polyestereigenschaften, z.B. der Schmelzviskosität, kann es erwünscht sein, einen definierten Grad von Vernetzung herbeizuführen. Zu diesem Zweck wird die Polykondensation ohne Antimonzusatz in Gegenwart von 2-8 ppm Titan und in Gegenwart von bis zu 1000 ppm, vorzugsweise von 100 bis 500 ppm, vernetzende Baugruppen liefernden organischen Verbindungen (Vernetzern) ausgeführt.

Als Vernetzer dienen Verbindungen, die mindestens drei funktionelle, zur Esterbildung befähigte Gruppen aufweisen. Zur Esterbildung befähigte funktionelle Gruppen sind die OH-Gruppe, die Carboxylgruppe, Alkoxycarbonyl, insbesondere Niederalkoxy-carbonyl, die Carbonsäureanhydrid-Gruppe, und von diesen abgeleitete reaktive Gruppen. Beispiele für gängige Vernetzer sind Pentaerythrit, Trimethylolpropan, Trimellithsäure, Trimesinsäure, Pyromellithsäure u.dgl.

Zur weiteren Verbesserung des Farbtons des Polyesters und zur Einsparung eines Teils des Kobalts hat es sich als zweckmäßig erwiesen, die Polykondensation ohne Antimonzusatz in Gegenwart von bis zu 50 ppm, vorzugsweise von 5 bis 25 ppm eines optischen Aufhellers auszuführen.

Selbstverständlich ist die chemische Zusammensetzung der Polyester für deren Eigenschaften von höchster Bedeutung. Zur Herstellung der erfindungsgemäßen Polyester, die für die oben genannten Einsatzzwecke geeignet sind, werden unter den für das Verfahren oben genannten Bedingungen
- 80 bis 100 mol-%: aromatische Dicarbonsäuren der Formel HOOC-X-COOH oder deren niedere aliphatische Ester und
- 0 bis 20 mol-%: aromatische Hydroxycarbonsäuren der Formel HO-X¹-COOH oder deren niedere aliphatische Ester mit Diolen der Formel HO-Y-OH verestert oder umgeestert,
wobei
- X: bezogen auf die Gesamtmenge der Di- und Hydroxycarbonsäuren, zu mehr als 80 mol-% aromatische Reste mit 5 bis 16, vorzugsweise 6 bis 12 C-Atomen und maximal 20 mol-% aliphatische Reste mit 4 bis 10 Kohlenstoffatomen, vorzugsweise 6 bis 8 Kohlenstoffatomen,
- X¹: den *p*-Phenylenrest,
- Y: bezogen auf die Gesamtmenge der um- oder veresterten Diole, zu mindestens 80 mol-% Alkylen- oder Polymethylengruppen mit 2 bis 4 Kohlenstoffatomen oder Cycloalkan- oder Dimethylen-cycloalkangruppen mit 6 bis 10 C-Atomen und zu maximal 20 mol-% geradkettiges oder verzweigtes Alkandiyl mit 4 bis 16, vorzugsweise 4 bis 8, C-Atomen oder Reste der Formel -(C₂H₄-O)ₙ-C₂H₄-, worin n eine ganze Zahl von 1 bis 40 bedeutet, wobei n = 1 oder 2 für Anteile bis zu 20 mol-% bevorzugt sind und Gruppen mit n = 10 bis 40 vorzugsweise nur in Anteilen von unter 5 mol-% vorhanden sind.

Besonders bevorzugt ist es, die Auswahl der Ausgangsmaterialien so zu treffen, daß
- X: bezogen auf die Gesamtmenge der Di- und Hydroxycarbonsäuren, zu 90 bis 100 mol-% *p*-Phenylenreste, zu 0 bis 7 mol-% *m*-Phenylenreste und zu 0 bis 5 mol-% aliphatische Reste mit 4 bis 10 Kohlenstoffatomen, vorzugsweise 6 bis 8 Kohlenstoffatomen
- X¹: den *p*-Phenylenrest,
- Y: bezogen auf die Gesamtmenge der um- oder veresterten Diole, zu mindestens 90 mol-% Alkylen- oder Polymethylengruppen mit 2 bis 4 Kohlenstoffatomen oder Cycloalkan- oder Dimethylen-cycloalkangruppen mit 6 bis 10 C-Atomen und zu maximal 10 mol-% geradkettiges oder verzweigtes Alkandiyl mit 4 bis 16, vorzugsweise 4 bis 8, C-Atomen oder Reste der Formel -(C₂H₄-O)ₙ-C₂H₄-, worin n für die Zahlen 1 oder 2 steht, bedeutet.

Besonders bevorzugt ist es, bei dem Verfahren keine Hydroxycarbonsäure der Formel HO-X¹-COOH einzusetzen und die Dicarbonsäurekomponente der Formel HOOC-X-COOH so zu wählen, daß X, bezogen auf die Gesamtmenge der Di- und Hydroxycarbonsäuren, zu 93 bis 99 mol-%, vorzugsweise 95 bis 98 mol-% *p*-Phenylenreste, zu 1 bis 7 mol-%, vorzugsweise 2 bis 5 mol-%, *m*-Phenylenreste bedeutet. Die aromatischen Reste, für die X und X¹ stehen, können unsubstituiert sein oder, sofern bestimmte Eigenschaften des Polyesters modifiziert werden sollen, einen oder zwei Substituenten tragen. Vorzugsweise sind die Reste überwiegend unsubstituiert, d.h. nicht mehr als 10 mol-% der aromatischen Reste tragen Substituenten. Der genaue Anteil substituierter Reste wird festgelegt entsprechend dem zu erzielenden Effekt. Als Substituenten kommen vorzugsweise die Methylgruppe und die Sulfonsäuregruppe in Frage.

Neben den oben genannten Ausgangsmaterialien können bis zu 10 mol-%, vorzugsweise bis zu 7 mol-% anderer cokondensierbarer Verbindungen in den Polyester einkondensiert werden, wenn bestimmte spezielle Eigenschaften gewünscht werden. Beispielsweise können nach dem Verfahren schwer entflammbare Polyester hergestellt werden, wenn man in den Polyester, bezogen auf die Gesamtheit der einkondensierten Dicarbonsäuren und ggf. Hydroxycarbonsäuren, 1 bis 10 mol-% der aus den DE-C-23 46 787 und 24 54 189 bekannten Verbindungen einkondensiert, die Polyesterbaugruppen der Formel 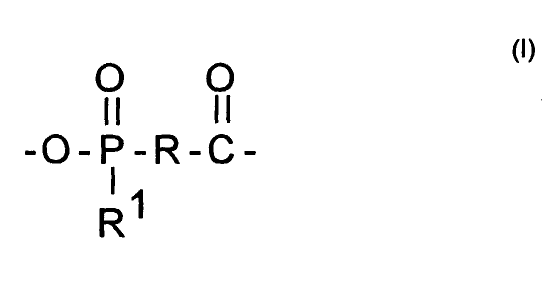 liefern, worin
- R: ein gesättigter offenkettiger oder cyclischer Alkylen-, Arylen- oder Aralkylenrest, vorzugsweise Alkan-diyl mit 2 bis 6 C-Atomen, Cycloalkandiyl mit 6 C-Atomen, Methylen-phenyl oder Phenylen, insbesondere Ethylen, und
- R¹: ein Alkylrest mit bis zu 6 C-Atomen oder ein Aryl- oder Aralkylrest, vorzugsweise Alkyl mit 1 bis 6 C-Atomen, oder Aryl oder Aralkyl mit 6 bis 7 C-Atomen, insbesondere Methyl, Ethyl, Phenyl oder Benzyl bedeuten.

Den Veresterungs-, Umesterungs oder Polykondensationsansätzen können bis zu 10 Gew.-% an Modifizierungszusätzen, Füllmitteln, Pigmenten, Farbstoffen, Antioxydantien, Hydrolyse-, Licht- und Temperatur-Stabilisatoren und/oder Verarbeitungshilfsmitteln zugefügt werden, soweit diese Zusätze den Titankatalysator nicht inhibieren. Bevorzugt ist bei dem Verfahren insbesondere der Zusatz von bis zu 10 Gew%, vorzugsweise bis zu 5 Gew.-% Polyesterstabilisatoren, die den Polyesteranteil der Mischung gegen Hydrolyse und thermischen Abbau schützen. Besonders vorteilhaft als Stabilisatoren sind solche Verbindungen, die mit endständigen Carboxylgruppen des Polyesters zu nicht sauren Endgruppen reagieren können, wie Glycidylether, Ketenimine, Aziridine, Isocyanate. Besonders vorteilhaft als Stabilisatoren sind Carbodiimide und Polycarbodiimide, insbesondere wenn sie in Kombination miteinander eingesetzt werden.

Die nach dem Verfahren hergestellten Polyester auf Basis aromatischer Dicarbonsäuren und aliphatischer Diole zeichnen sich dadurch aus, daß im unmattierten Zustand ihre Farbzahlkomponenten
a* im Bereich von -3 bis +3, vorzugsweise von -2 bis +2,
b* im Bereich von -6 bis +6, vorzugsweise von -3,5 bis +3,5 und
L* im Bereich von 55 bis 75, vorzugsweise von 60 bis 70

liegen. Weiterhin ist der erfindungsgemäße Polyester dadurch gekennzeichnet, daß er frei ist von Antimon,
- 1 bis 10 ppm: Titan (gerechnet als Metall),
- 20 bis 120 ppm: eines Umesterungskatalysatormetalls in Form katalytisch unwirksamer Komplexe mit Phosphorsäure, phosphoriger Säure und/oder Phosphonsäuren oder einem Derivat derselben,
- 0 bis 80 ppm: Kobalt (gerechnet als Metall), das teilweise in Form katalytisch unwirksamer Komplexe mit Phosphorsäure, phosphoriger Säure und/oder Phosphonsäuren oder einem Derivat derselben vorliegt, und
- ggf. bis zu 50 ppm: eines optischen Aufhellers
enthält. Vorzugsweise ist der erfindungsgemäße Polyester frei von Antimon und enthält
- 2 bis 8 ppm: Titan (gerechnet als Metall),
- 50 bis 90 ppm: Mangan (gerechnet als Metall) in Form katalytisch unwirksamer Komplexe mit Phosphorsäure, phosphoriger Säure und/oder Phosphonsäuren oder einem Derivat derselben,
- 20 bis 40 ppm: Kobalt, das teilweise in Form katalytisch unwirksamer Komplexe mit Phosphorsäure, phosphoniger Säure und/oder Phosphonsäuren oder einem Derivat derselben vorliegt, und
- ggf. bis zu 25 ppm: eines optischen Aufhellers.

Weiterhin ist es bevorzugt, daß 90 bis 99 % des Kobalts in Form katalytisch unwirksamer Komplexe mit Phosphorsäure, phosphoriger Säure und/oder Phosphonsäuren oder einem Derivat derselben, vorliegen und/oder 5 bis 25 ppm eines optischen Aufhellers enthalten sind.

Die katalytisch unwirksamen Komplexe des Umesterungskatalysators, vorzugsweise des Mangans, und des Kobalts können im Prinzip alle für die Inaktivierung dieser Metalle bekannten Komplexbildner enthalten. Bevorzugt sind die katalytisch unwirksamen Komplexe des Umesterungskatalysators, insbesondere des Mangans und Kobalts mit Phosphorsäure, Polyphosphorsäure oder insbesondere phosphoriger Säure oder einem Derivat, insbesondere einem Ester dieser Säuren.

Von besonderer Bedeutung für die Gesamtheit der technischen Merkmale ist natürlich auch die Struktur der Polyesterkette. Rein qualitativ ist zu sagen, daß sie aus den in bekannten faserbildenden Polyestern üblichen Baugruppen aufgebaut ist. Überwiegend, d.h. zu mindestens 80 mol-%, bestehen sie aus Bausteinen, die sich von aromatischen Dicarbonsäuren und von aliphatischen Diolen ableiten. Gängige aromatische Dicarbonsäurebausteine sind die zweiwertigen Reste von Benzoldicarbonsäuren, insbesondere der Terephthalsäure und der Isophthalsäure; gängige Diole haben 2-4 C-Atome, wobei das Ethylenglycol besonders geeignet ist. Vorzugsweise enthalten modifizierte Polyester mindestens 80 mol-% Ethylenterephthalat-Einheiten. Die restlichen 20 mol-% bauen sich dann aus Dicarbonsäureeinheiten und Glycoleinheiten auf, die als sogenannte Modifizierungsmittel wirken und die es dem Fachmann gestatten, die physikalischen und chemischen Eigenschaften der aus den Polyestern hergestellten Erzeugnisse, wie z.B. Filamente und Verpackungsmaterialien (z.B. Getränkeflaschen), gezielt zu beeinflussen. Beispiele für solche Dicarbonsäureeinheiten sind Reste der Isophthalsäuren oder von aliphatischen Dicarbonsäure wie Glutarsäure, Adipinsäure oder Sebazinsäure. Beispiele für modifizierend wirkende Diolreste sind solche von längerkettigen Diolen, z.B. von Propandiol oder Butandiol, von Di- oder Tri-ethylenglycol oder, sofern in geringer Menge vorhanden, von Polyglycol mit einem Molgewicht von ca. 500 - 2000.

Im einzelnen sind Polyester bevorzugt, deren Polymerketten aus 80 bis 100 mol-% Baugruppen der Formel II 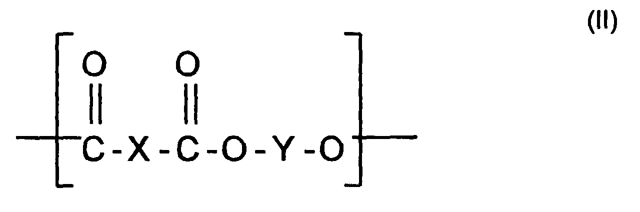 und 20 bis 0 mol-% Baugruppen der Formel III 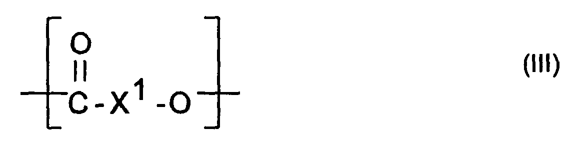 aufgebaut sind, worin
- X: zu mehr als 80 mol-% aromatische Reste mit 5 bis 16, vorzugsweise 6 bis 12 C-Atomen und maximal 20 mol-% aliphatische Reste mit 4 bis 10 Kohlenstoffatomen, vorzugsweise 6 bis 8 Kohlenstoffatomen,
- X¹: den *p*-Phenylenrest,
- Y: zu mindestens 80 mol-% Alkylen- oder Polymethylengruppen mit 2 bis 4 Kohlenstoffatomen oder Cycloalkan- oder Dimethylen-cycloalkangruppen mit 6 bis 10 C-Atomen und zu maximal 20 mol-% geradkettiges oder verzweigtes Alkandiyl mit 4 bis 16, vorzugsweise 4 bis 8, C-Atomen oder Reste der Formel -(C₂H₄-O)ₙ-C₂H₄-, worin n eine ganze Zahl von 1 bis 40 bedeutet, wobei n = 1 oder 2 für Anteile bis zu 20 mol-% bevorzugt sind und Gruppen mit n = 10 bis 40 vorzugsweise nur in Anteilen von unter 5 mol-% vorhanden sind.

Besonders bevorzugt sind Polyester, die aus Baugruppen der Formel II bestehen worin
- X: zu 90 bis 100 mol-% *p*-Phenylenresten, zu 0 bis 7 mol-% *m*-Phenylenreste und zu 0 bis 5 mol-% aliphatische Reste mit 4 bis 10 Kohlenstoffatomen, vorzugsweise 6 bis 8 Kohlenstoffatomen und
- Y: zu mindestens 90 mol-% Alkylen- oder Polymethylengruppen mit 2 bis 4 Kohlenstoffatomen oder Cycloalkan- oder Dimethylen-cycloalkangruppen mit 6 bis 10 C-Atomen und zu maximal 10 mol-% geradkettiges oder verzweigtes Alkandiyl mit 4 bis 16, vorzugsweise 4 bis 8, C-Atomen oder Reste der Formel -(C₂H₄-O)ₙ-C₂H₄-, worin n für die Zahlen 1 oder 2 steht, bedeuten.

Insbesondere sind solche Polyester bevorzugt, die aus Baugruppen der Formel II bestehen, worin X zu 93 bis 99 mol-% *p*-Phenylenreste und zu 1 bis 7 mol-% *m*-Phenylenreste bedeutet.

Häufig ist es zweckmäßig, einen definierten Vernetzungsgrad des Polyesters einzustellen. In diesen Fällen ist es bevorzugt, daß der Polyester bis zu 1000 ppm der oben angegebenen vernetzenden Baugruppen enthält.

Zweckmäßigerweise haben die durch Schmelze-Polykondensation hergestellten Polyester eine intrinsische Viskosität von 0,600 bis 0,900 gemessen in Dichloressigsäure bei 25°C.

Vorzugsweise enthalten Polyester, die Baugruppen der Formel III aufweisen, 70 bis 100 mol-%, insbesondere 85 bis 100 mol-%, Baugruppen der Formel II und 0 bis 30 mol-%, insbesondere 0 bis 15 mol-%, Baugruppen der Formel III.

Die aromatischen Reste, für die X steht, können im Rahmen der gegebenen Definition alle gleich oder verschieden sein. Insbesondere können die oben genannten, von X repräsentierten Baugruppen, die zu mindestens 80 mol-% die

Polyesterkette bilden, einzeln oder gemischt in der Polyesterkette vorliegen. Bevorzugt ist es, wenn die mindestens 80 mol-% der Polyesterkette von nur einem oder zwei Individuen aus der Gruppe der für diese Hauptkomponenten angegebenen Reste gebildet werden. Eine eventuell gewünschte weitere Modifizierung der Polyesterkette erfolgt dann vorzugsweise durch andere Baugruppen im Rahmen der Definition, die für die zu maximal 20 mol-% vorhandenen, von X repräsentierten Baugruppen gegeben worden ist.

So können die mindestens 80 Gew.-% aromatischen Reste beispielsweise alle 1,4-Phenylenreste sein oder sie können sich beispielsweise im Molverhältnis von 95:5 bis 99:1 aus 1,4- und 1,3-Phenylenresten oder im Molverhältnis von 4:6 bis 6:4 aus 2,6-Naphthylenresten und Biphenyl-4,4'-diyl-Resten zusammensetzen. Bevorzugt sind Polyester, in denen X mindestens 95 mol-% aromatische und maximal 5 mol-% aliphatische Reste bedeuten, insbesondere aber solche, in denen X ausschließlich für aromatische Reste steht.

Auch die Reste, für die Y steht, können im Rahmen der gegebenen Definition alle gleich oder verschieden sein. Insbesondere können die oben genannten, von Y repräsentierten Baugruppen, die zu mindestens 80 mol-% die Polyesterkette bilden, einzeln oder gemischt in der Polyesterkette vorliegen. Bevorzugt ist es, wenn die mindestens 80 mol-% der Polyesterkette von nur einem oder zwei Individuen aus der Gruppe der für diese Hauptkomponenten angegebenen Reste gebildet werden.

Eine eventuell gewünschte weitere Modifizierung der Polyesterkette erfolgt dann vorzugsweise durch andere Baugruppen im Rahmen der Definition, die für die zu maximal 20 mol-% vorhandenen, von Y repräsentierten Baugruppen gegeben worden ist. So können die mindestens 80 Gew.-% aliphatischen Reste beispielsweise alle Ethylenreste sein oder sie können sich beispielsweise im Molverhältnis von 10:1 bis 1:10 aus Ethylen und 1,4-Dimethylen-cyclohexan-Resten zusammensetzen. Besonders bevorzugt sind Polyester, in denen Y mindestens 95 mol-% Ethylen-Reste sind.

Bevorzugte aromatische Reste, für die X steht sind 1,4- und 1,3-Phenylen. Geeignete Reste sind aber auch 1,4-, 1,5-, 1,8-, 2,6- und 2,7-Naphthylen, 4,4'-Biphenylen, Furylen und Reste der Formel IV 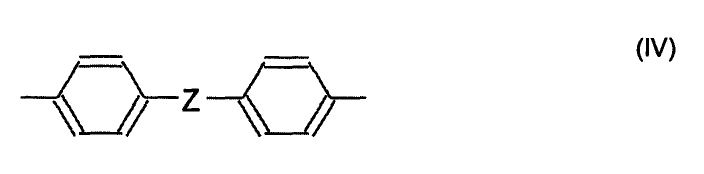 worin Z Polymethylen oder Alkylen mit 1 bis 4 Kohlenstoffatomen, -SO₂-, -COO-, -O- oder -S- bedeutet.

Die aromatischen Reste, für die X steht, können ihrerseits noch einen oder zwei Substituenten tragen. In diesem Fall ist es jedoch bevorzugt, daß nur ein Anteil von bis zu 15 %, insbesondere von bis zu 7 % der vorhandenen aromatischen Reste substituiert ist. Vorzugsweise tragen die substituierten aromatischen Reste jeweils nur einen Substituenten. Besonders geeignete Substituenten sind Alkyl mit 1 bis 4 C-Atomen, Alkoxy mit 1 bis 4 C-Atomen, Chlor und die Sulfogruppe.

Reste, die sich von aliphatischen Dicarbonsäuren ableiten, und aromatische Reste, die gewinkelte Ketten liefern, beispielsweise Isophthalsäurereste, oder die sperrigere aromatische Kerne, wie den Naphthalinkern aufweisen, sowie die längerkettigen, für Y stehenden Baugruppen werden insbesondere dann in die Polyesterkette eingebaut, wenn eine Modifizierung der Eigenschaften des Polyesters erwünscht ist. Bevorzugt sind Polyester, die weniger als 7 % dieser modifizierend wirkenden Komponenten enthalten.

Zur Erzielung spezieller Gebrauchseigenschaften dient z.B. der Einbau von Sulfogruppen enthaltenden Bausteinen (z.B. Sulfo-isophthalsäure) in den Polyester, der dadurch eine Affinität zu basischen Farbstoffen erhält oder der Einbau von Baugruppen der oben angegebenen Formel I, der zu schwer entflammbaren Polyestern führt.

### Beispiel 1a

Ein Umesterungsreaktor wird mit 9,75 kg Dimethylterephthalat, 0,25 kg Dimethylisophthalat, 6 kg Ethylenglycol und 3 g Manganacetat · 4 H₂O (68 ppm Mangan, bezogen auf Polyester) beschickt und die Mischung unter Rühren und unter Stickstoff als Schutzgas auf 140°C erwärmt. Die Reaktionstemperatur wird im Verlauf von 4 Stdn. auf 230°C gesteigert und das abgespaltene Methanol und der Ethylenglycol-Überschuß abdestilliert. Anschließend wird das geschmolzene Reaktionsprodukt in ein Polykondensationsgefäß überführt, mit 1,65 g (165 ppm) H₃PO₃ als Komplexbildner, und 1,27 g (127 ppm) Kobaltacetat (entspr. 30 ppm Co) versetzt und 10 bis 15 Minuten bei 230 °C gerührt. Danach werden 0,27 g (27 ppm) Kaliumtitanyloxalat (entspr. 3,6 ppm Ti) zugesetzt und der Ansatz unter Stickstoff bei 240°C gerührt, wobei unter leichtem Vakuum Ethylenglycol abdestilliert wird. Dann wird der Innendruck im Verlauf von einer Stunde auf 1,13 mbar gesenkt und dabei die Temperatur der Schmelze von 240 auf 270°C erhöht. Im Verlauf einer weiteren halben Stunde wird dann die Temperatur auf 280 °C gesteigert und dabei solange weitergerührt, bis eine Probe der Schmelze eine spezifische Lösungsviskosität, gemessen in einer Lösung von 1 g der Schmelze in 100 ml Dichloressigsäure bei 25 °C, von 0,83 aufweist.

Alternativ und bequemer kann die Polykondensation auch bis zu einer bestimmten Schmelzviskosität fortgeführt werden, wenn in Vorversuchen die Schmelzviskosität bei 280 °C ermittelt wurde, die der Lösungsviskosität von 0,83 entspricht.

Die Schmelze wird abgekühlt und in üblicher Weise zu Pellets mit einem Durchmesser von 2 bis 3 mm verarbeitet. Der so erhaltene Polyester hat folgende Kennzahlen:
Gehalt an Carboxylgruppen [mmol/kg]: 12
Gehalt an Diethylenglycol [%]: 0,5
Farbzahlen: L* = 63,44; a* = -0,62; b* = 3,09

Der so hergestellte Polyester kann durch Feststoffkondensation noch weiter kondensiert werden. Zu diesem Zweck werden die oben hergestellten Pellets in üblicher Weise unter langsamer Durchmischung im Vakuum oder unter Stickstoff 17 Stunden auf 220 °C erhitzt. Man erhält so einen Polyester mit einer, wie oben gemessenen, spezifischen Viskosität von 1,014.

### Beispiele 1b bis 1l

Das obige Beispiel wurde mehrfach in der in Beispiel 1a beschriebenen diskontinuierlichen Weise (Beispiele 1j bis 1l) oder analog in kontinuierlichem Betrieb (Beispiele 1b bis 1i) wiederholt, wobei die Menge des Kobaltzusatzes, die Art und Menge des Komplexbildners, sowie Art und Menge des Titan-Katalysators abgeändert wurde und in einigen Fällen zusätzlich ein kommerzieller optischer Aufheller (® HOSTALUX KS der Hoechst AG) oder ein Vernetzer (Pentaerythrit) zugesetzt wurde. Bei der Polykondensation in der Schmelze wurde unter verschiedenen Drucken und mit variierten Reaktionszeiten gearbeitet und bei der Feststoffkondensation wurden Kondensationsdauer und -temperatur variiert.

Die Zusammensetzung der Ansätze und die Reaktionsbedingungen, soweit sie variiert wurden, die Farbzahlen, sowie die erreichte spezifische Viskosität und der Gehalt der Polyester an Carbonsäuregruppen und Diglycol sind in den folgenden Tabellen 1 und 2 angegeben worden.

Die in den Tabellen benutzten Abkürzungen haben folgende Bedeutungen:
Kti = Kalium-Titanyloxalat
Tiip = Isopropyltitanat
Co(AcO)₂·4 H₂O = Kobaltacetat-tetrahydrat
PO3 = phosphorige Säure
PO4 = Phosphorsäure
PPA = Polyphosphorsäure
PHM = PHM-Ester
HLX = ® HOSTALUX KS
Penta = Pentaerythrit
SV = spezifische Viskosität;
[COOH] Carboxyl-Endgruppen-Konzentration
DEG = Konzentration von Diethylenglycol

Alle ppm-Angaben beziehen sich auf die Menge des bei dem Ansatz theoretisch zu erhaltenden Polyesters. Sofern der Zusatz eine Metallverbindung ist (z.B. Katalysator), bedeutet die Nennung des Verbindungskürzels, daß die ppm-Angabe die Menge der Verbindung bezeichnet, sofern das Metallsymbol angegeben ist, bedeutet die ppm-Angabe die Menge des in dem Zusatz enthaltenen Metalls.

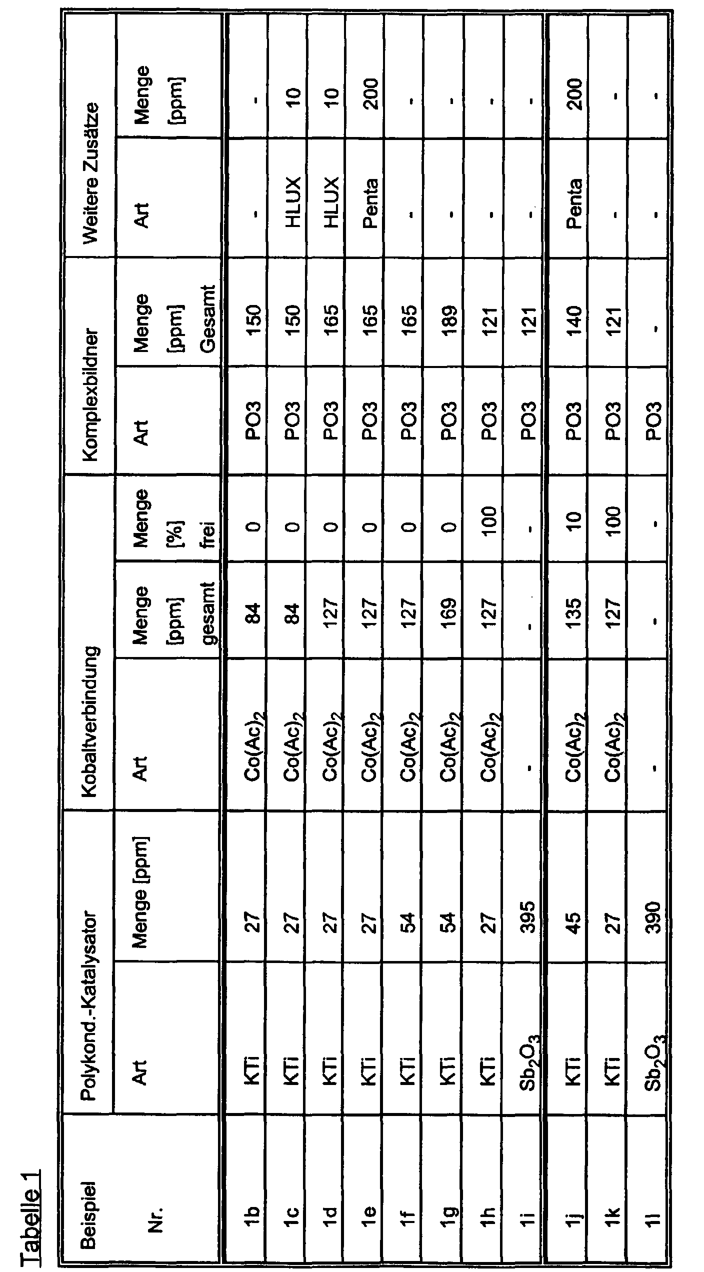

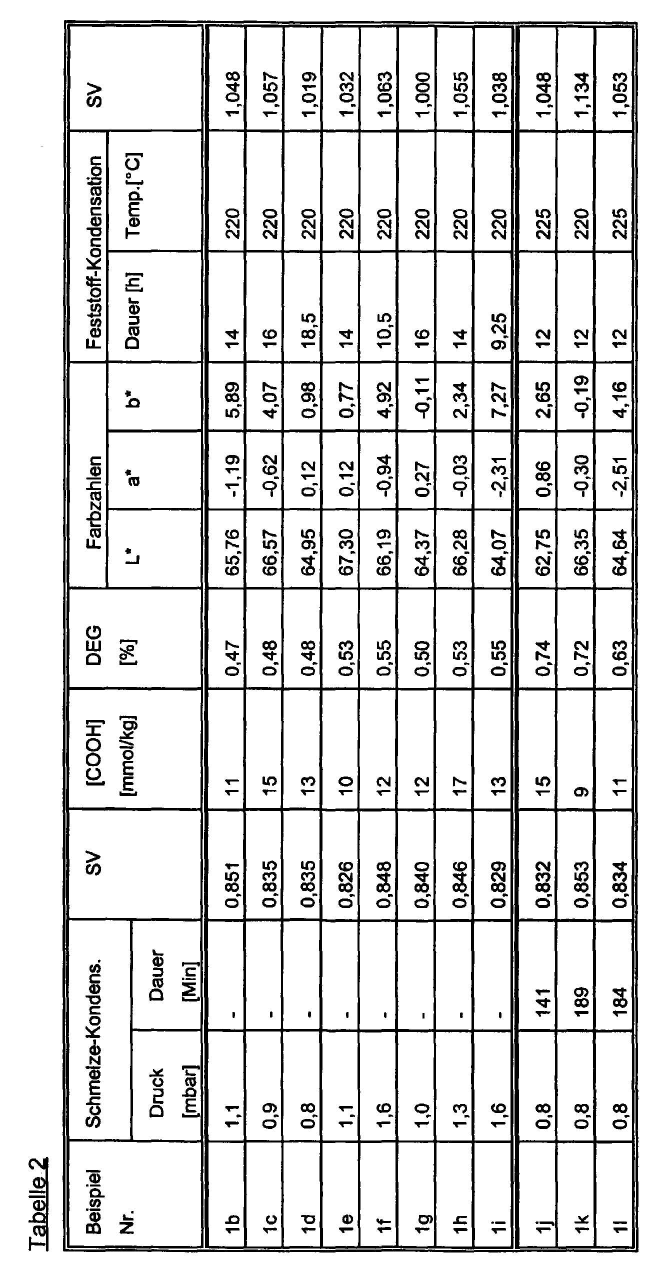

### Beispiel 2

Das folgende Ausführungsbeispiel veranschaulicht die Herstellung eines Polyesters durch Direktveresterung:

Ein Veresterungsreaktor wird mit 8,29 kg Terephthalsäure, 0,124 kg Isophthalsäure und 4,0 kg Ethylenglycol beschickt und die Mischung unter Rühren und unter Stickstoff als Schutzgas unter einem Druck von 3,2 bar so erwärmt, daß das abgespaltene Wasser abdestilliert.

Wenn die Wasserabspaltung beendet ist wird das geschmolzene Reaktionsprodukt in ein Polykondensationsgefäß überführt, mit 0,35 g (32 ppm) H₃PO₃ als Komplexbildner, und 1,47 g (135 ppm) Kobaltacetat-tetrahydrat (entspr. 32 ppm Co) versetzt. Danach werden 0,49 g (45 ppm) Kaliumtitanyloxalat (entspr. 6,1 ppm Ti) zugesetzt und der Ansatz unter Stickstoff bei 240°C gerührt, wobei unter leichtem Vakuum Ethylenglycol abdestilliert wird.

Dann wird der Innendruck im Verlauf von einer Stunde auf 1,13 mbar gesenkt und dabei die Temperatur der Schmelze von 240 auf 270°C erhöht. Im Verlauf einer weiteren halben Stunde wird dann die Temperatur auf 280 °C gesteigert und dabei solange weitergerührt, bis eine Probe der Schmelze eine spezifische Lösungsviskosität, gemessen in einer Lösung von 1 g der Schmelze in 100 ml Dichloressigsäure bei 25 °C, von 0,83 aufweist. Die Schmelze wird abgekühlt und in üblicher Weise zu Pellets mit einem Durchmesser von 2 bis 3 mm verarbeitet.

Der so erhaltene Polyester hat folgende Kennzahlen:
Gehalt an Carboxylgruppen [mmol/kg]: 13
Gehalt an Diethylenglycol [%]: 1,19
Farbzahlen: L* = 63,6; a* = 1,90; b* = -1,5

Der so hergestellte Polyester kann durch Feststoffkondensation noch weiter kondensiert werden. Hierzu werden die oben hergestellten Pellets unter langsamer

Durchmischung unter Stickstoff oder im Vakuum 9,5 Stunden auf 220 °C erhitzt. Man erhält so einen Polyester mit einer, wie oben gemessenen, spezifischen Viskosität von 1,087.

In analoger Weise, mit den aus den Tabellen 3 und 4 ersichtlichen Bedingungen, können weitere Polyester hergestellt werden. Die Produkte haben die aus Tabelle 4 ersichtlichen Merkmale.

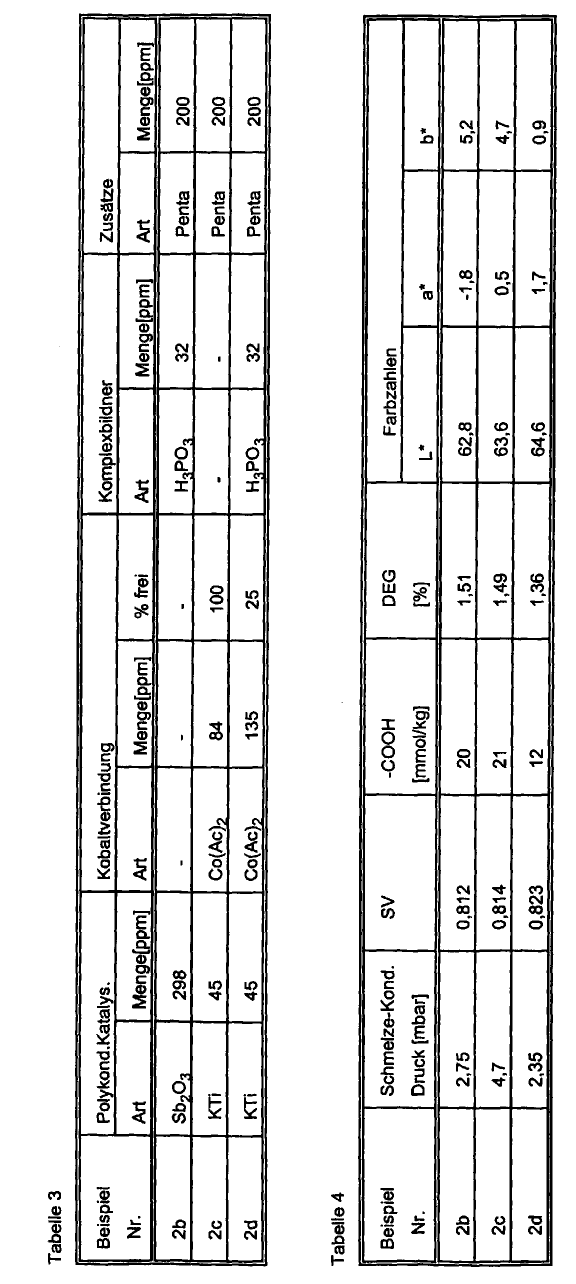

## Patentansprüche

1. Thermostabiler, farbneutraler, antimonfreier Polyester auf Basis aromatischer Dicarbonsäuren und aliphatischer Diole, dadurch gekennzeichnet, daß er durch
a)
(i) Veresterung aromatischer Dicarbonsäuren mit aliphatischen Diolen oder
(ii) Umesterung niederer aliphatischer Ester aromatischer Dicarbonsäuren mit aliphatischen Diolen in Gegenwart von 20 bis 120 ppm, bezogen auf das Katalysatormetall, eines Umesterungskatalysators, der nach Abschluß der Umesterung durch Zusatz eines Komplexierungsmittels inaktiviert wird, und
b) anschließende Polykondensation in Gegenwart einer Titanverbindung als Katalysator,
hergestellt ist, wobei nach Abschluß der Veresterung oder Umesterung dem Veresterungs- oder Umesterungsansatz
- 100% der zu dem eingesetzten Umesterungskatalysator äquivalenten Menge und
- 90 bis 99 % der zu dem einzusetzenden Kobalt äquivalenten Menge von Phosphorsäure, phosphoriger Säure und/oder Phosphonsäuren oder einem Derivat derselben als Komplexierungsmittel und
- dann dem Ansatz 20 bis 80 ppm Kobalt in Form einer Kobaltverbindung
zugefügt werden und die Polykondensation ohne Antimonzusatz in Gegenwart von 1 bis 10 ppm Titan, das in Form einer Titanverbindung zugesetzt wird, ausgeführt wird.

2. Polyester gemäß Anspruch 1, dadurch gekennzeichnet, daß im unmattierten Zustand seine Farbzahlkomponenten
a* im Bereich von -3 bis +3,
b* im Bereich von -6 bis +6 und
L* im Bereich von 55 bis 75
liegen.

3. Polyester gemäß Anspruch 1 oder 2, dadurch gekennzeichnet, daß er antimonfrei ist, 1 bis 10 ppm Titan, 20 bis 120 ppm eines Umesterungskatalysatormetalls in Form katalytisch unwirksamer Komplexe mit Phosphorsäure, phosphoriger Säure und/oder Phosphonsäuren oder einem Derivat derselben sowie 0 bis 80 ppm Kobalt, das teilweise in Form katalytisch unwirksamer Komplexe mit Phosphorsäure, phosphoriger Säure und/oder Phosphonsäuren oder einem Derivat derselben vorliegt, und ggf. bis zu 50 ppm eines optischen Aufhellers enthält.

4. Polyester gemäß mindestens einem der Ansprüche 1 bis 3, dadurch gekennzeichnet, daß er antimonfrei ist, 2 bis 8 ppm Titan, 50 bis 90 ppm Mangan (gerechnet als Metall) in Form katalytisch unwirksamer Komplexe mit Phosphorsäure, phosphoriger Säure und/oder Phosphonsäuren oder einem Derivat derselben, 20 bis 40 ppm Kobalt, das teilweise in Form katalytisch unwirksamer Komplexe mit Phosphorsäure, phosphoriger Säure und/oder Phosphonsäuren oder einem Derivat derselben vorliegt, und ggf. bis zu 25 ppm eines optischen Aufhellers enthält.

5. Polyester gemäß mindestens einem der Ansprüche 1 bis 5, dadurch gekennzeichnet, daß im unmattierten Zustand seine Farbzahlkomponenten
a* im Bereich von -2 bis +2,
b* im Bereich von -3,5 bis +3,5 und
L* im Bereich von 60 bis 70
liegen.

6. Polyester gemäß mindestens einem der Ansprüche 1 bis 5, dadurch gekennzeichnet, daß 90 bis 99 % des Kobalts in Form katalytisch unwirksamer Komplexe mit Phosphorsäure, phosphoriger Säure und/oder Phosphonsäuren oder einem Derivat derselben vorliegen.

7. Polyester gemäß mindestens einem der Ansprüche 10 bis 14, dadurch gekennzeichnet, daß er 5 bis 25 ppm eines optischen Aufhellers enthält.

8. Polyester gemäß mindestens einem der Ansprüche 1 bis 7, dadurch gekennzeichnet, daß seine Polymerketten aus 80 bis 100 mol-% Baugruppen der Formel II 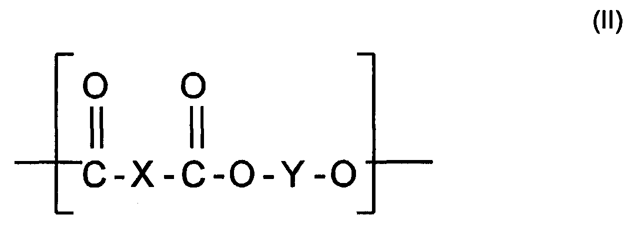 und 20 bis 0 mol-% Baugruppen der Formel III 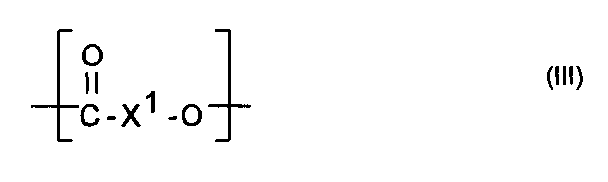 aufgebaut sind, worin
X zu mehr als 80 mol-% aromatische Reste mit 5 bis 16, vorzugsweise 6 bis 12 C-Atomen und maximal 20 mol-% aliphatische Reste mit 4 bis 10 Kohlenstoffatomen, vorzugsweise 6 bis 8 Kohlenstoffatomen,
X¹ den *p*-Phenylenrest,
Y zu mindestens 80 mol-% Alkylen- oder Polymethylengruppen mit 2 bis 4 Kohlenstoffatomen oder Cycloalkan- oder Dimethylencycloalkangruppen mit 6 bis 10 C-Atomen und zu maximal 20 mol-% geradkettiges oder verzweigtes Alkandiyl mit 4 bis 16, vorzugsweise 4 bis 8, C-Atomen oder Reste der Formel -(C₂H₄₋O)ₙ-C₂H₄-, worin n eine ganze Zahl von 1 bis 40 ist, wobei n = 1 oder 2 für Anteile bis zu 20 mol-% bevorzugt sind und Gruppen mit n = 10 bis 40 vorzugsweise nur in Anteilen von unter 5 mol-% vorhanden sind.

9. Polyester gemäß mindestens einem der Ansprüche 1 bis 8, dadurch gekennzeichnet, daß er aus Baugruppen der Formel II besteht worin
X zu 90 bis 100 mol-% *p*-Phenylenresten, zu 0 bis 7 mol-% *m*-Phenylenreste und zu 0 bis 5 mol-% aliphatische Reste mit 4 bis 10 Kohlenstoffatomen, vorzugsweise 6 bis 8 Kohlenstoffatomen und
Y zu mindestens 90 mol-% Alkylen- oder Polymethylengruppen mit 2 bis 4 Kohlenstoffatomen oder Cycloalkan- oder Dimethylencycloalkangruppen mit 6 bis 10 C-Atomen und zu maximal 10 mol-% geradkettiges oder verzweigtes Alkandlyl mit 4 bis 16, vorzugsweise 4 bis 8, C-Atomen oder Reste der Formel -(C₂H₄-O)ₙ-C₂H₄-, worin n für die Zahlen 1 oder 2 steht,
bedeuten.

10. Polyester gemäß mindestens einem der Ansprüche 1 bis 9, dadurch gekennzeichnet, daß er aus Baugruppen der Formel II besteht worin X zu 93 bis 99 mol-% *p*-Phenylenreste und zu 1 bis 7 mol- % *m*-Phenylenreste bedeutet.

11. Polyester gemäß mindestens einem der Ansprüche 1 bis 10, dadurch gekennzeichnet, daß die katalytisch unwirksamen Komplexe des Mangans und des Kobalts Komplexe mit phosphoriger Säure oder eines Esters derselben sind.

12. Polyester gemäß mindestens einem der Ansprüche 1 bis 11, dadurch gekennzeichnet, daß er ggf. bis zu 1000 ppm vernetzende Baugruppen enthält.
